# EUROPEAN PATENT SPECIFICATION

(11) **EP 2 204 258 B1**
(45) Date of publication and mention of the grant of the patent: **18.04.2012**
(21) Application number: 08837427.7
(22) Date of filing: 06.10.2008
(51) Int. Cl.: B23Q 1/52, B23Q 1/28, B23Q 1/70

(54) **MACHINE TOOL SPINDLE HEAD**
SPINDELKOPF FÜR WERKZEUGMASCHINE
TÊTE DE BROCHE POUR MACHINE-OUTIL

(30) Priority: 11.10.2007 JP 2007265864
(43) Date of publication of application: 07.07.2010
(73) Proprietor: Tsudakoma Kogyo Kabushiki Kaisha, Kanazawa-shi, Ishikawa 921-8650 (JP); Sugiyama, Akira, Rancho Palos Verdes, CA 90275 (US)
(72) Inventor: SUGIYAMA, Akira, Rancho Palos Verdes, California 90275 (US); TATSUDA, Yoshinori, Kanazawa-shi Ishikawa -ken 921-8650 (JP)
(74) Representative: Samson & Partner
(86) International application number: PCT/JP2008/068148
(87) International publication number: WO 2009/048035

(56) References cited:
- EP-A2- 1 157 777
- DE-A1-102005 006 221
- DE-A1-102005 046 847
- JP-A- 2003 048 135
- JP-T- 2005 527 387
- JP-U- 2 104 946

## Description

### Technical Field

The present invention relates to a machine-tool spindle head, and, more particularly, to a structure for rotationally driving a spindle unit.

### Background Art

A spindle head used in a machine tool (which, for example, cuts a workpiece by a tool that is rotationally driven) and including a spindle unit and a support head is publicly known. The spindle unit rotationally drives a spindle by a built-in drive motor for rotationally driving the spindle having the tool mounted to one end thereof. The support head supports the spindle unit through a support shaft, and rotationally drives the spindle unit around an axis (A axis) of the support shaft to index an angular position.

A spindle head similar to that mentioned above is discussed in Patent Document 1. According to the spindle head discussed in Patent Document 1, the support head has a fork shape formed by a pair of fork arms for supporting the spindle unit, and rotatably supports support shafts connected to respective side portions of the spindle unit in the respective fork arms.

In the spindle head (support head) in Patent Document 1, as a drive motor for rotationally driving the support shafts, a DD motor (direct drive motor)/built-in motor) is used. The drive motor includes a motor rotor and a motor stator concentrically disposed around an axis of each of the support shafts in a housing of the support head. The drive motor rotationally drives the support shafts by connecting the motor rotor to the support shafts without interposing drive transmission means such as a gear.

In the spindle head that supports both side portions of the spindle unit by a pair of support shafts, in order to prevent a reduction in processing precision caused by, for example, twisting deformation of the shafts, it is desirable that both sides of the spindle unit be rotationally driven, that is, both support shafts be rotationally driven. To achieve this, a structure in which the DD motor is disposed in each fork arm, and in which the pair of support shafts are rotationally driven in synchronism with each other is used in the spindle head (support head) in Patent Document 1.

However, in the structure in which the DD motor is disposed in each fork arm, the size of the spindle head in the direction of an A axis is increased, thereby increasing the size of the entire device. If the size of the entire device is increased, interference between the support head and a workpiece occurs when, for example, processing an inner portion of a hole formed in the workpiece. Therefore, the structure cannot be used to perform the processing, thereby limiting the processing applications of the structure.

When, in order to reduce the interference between the support head and the workpiece, a structure in which an end of the spindle unit projects by a large amount from the support head is used, the distance from the shaft centers of the support shafts to an end of a tool is long. Therefore, due to the influence of a load applied to the tool, the spindle unit vibrates during processing, thereby reducing processing precision. Consequently, heavy cutting cannot be performed or feed speed needs to be reduced. Even in each of these cases, processing is restricted.

When starting, operating, or stopping two drive motors (DD motors), the rotations of both of the drive motors must be completely synchronized for driving them, thereby causing controlling of the drive motors (DD motors) to become complicated.
Patent Document 1: United States Patent No. 5584621

### Disclosure of Invention

DE 10 2005 046 847 A1 discloses a rotary spindle head which has a drive shaft rotationally driven by a drive motor. A spindle unit is supported in the spindle head by fork arms of a support head. The spindle head includes drive transmission mechanisms that connect a shaft and the drive shaft. The drive transmission mechanisms are connected to a worm wheel provided at one end of the shafts through worms and transfer the rotation of the drive shaft to the one end of the shaft.

While the invention is defined in the independent claim, further aspects of the invention are set forth in the dependent claims, the drawings and the following description.

### Problems to be Solved by the Invention

Accordingly, an object of the present invention is to provide a machine-tool spindle head of this type that makes it possible to prevent the size of the entire device from increasing and that can easily control a drive motor compared to a related device.

### Means for Solving the Problems

To this end, the present invention provides a machine-tool spindle head rotatably supporting a spindle unit by a pair of support shafts and a pair of fork arms of the support head. In the spindle head, a drive motor is disposed in the support head at a location that is separated from the pair of support shafts, and rotation of the drive motor is transmitted to each support shaft by a pair of drive transmission mechanisms.

More specifically, a machine-tool spindle head (1) comprises a spindle unit (4) and a fork-shaped support head (5). The spindle unit (4) rotationally drives a spindle (3) to whose end a tool (2) is mounted. The support head (5) supports the spindle unit (4), and includes a pair of fork arms (7) rotatably supporting a pair of support shafts (6), respectively, for supporting the spindle unit (4). The spindle head (1) includes a drive shaft (8), a drive motor (9), and a pair of drive transmission mechanisms (10). The drive shaft (8) is rotatably supported in the support head (5) and extends parallel to an axial direction of the support shafts (6). The drive motor (9) rotationally drives the drive shaft (8). The drive transmission mechanisms (10) connect end portions of the drive shaft (8) and the respective support shafts (6) to each other, and transmit rotation of the drive motor (9) to the support shafts (6).

In addition, in the machine-tool spindle head (1), the drive motor (9) is connected to the drive shaft (8) between the pair of drive transmission mechanisms (10) in an axial direction of the drive shaft (8).

Further, in the machine-tool spindle head (1), the drive motor (9) is disposed in a housing (11) of the support head (5), and a motor stator (12) and a motor rotor (13) of the drive motor (9) are concentrically disposed with respect to an axis of the drive shaft (8).

Still further, the machine-tool spindle head (1) includes clamping mechanisms (14) for maintaining a rotation angle position of the drive shaft (8) in the support head (5). The clamping mechanisms (14) are provided on respective sides of a location where the drive motor (9) and the drive shaft (8) are connected to each other.

The machine-tool spindle head (1) includes a supporting member (17) linked to an end portion of each support shaft (6) at a side opposite to the spindle unit (4). The supporting member (17) includes a pair of support arms (15), which face the pair of fork arms (7) and extend in an axial direction of the spindle unit (4), and a base section (16), which connects the pair of support arms (15) to each other. With the spindle unit (4) being fitted and inserted in a support hole (18) in the base section (16) of the supporting member (17), an outer peripheral portion of the spindle unit (4) is supported by the supporting member (17).

### Advantages

According to the invention of Claim 1, although a two-side driving mode in which the pair of support shafts are both rotationally driven is used, a drive source thereof is disposed as a single drive motor at a location that is separated from the pair of support shafts in the support head. Therefore, compared to the related structure in which a drive motor is disposed in each fork arm, it is possible to reduce the size of the spindle head, in particular, the size of a portion of the spindle head from near the support shafts to an end of the spindle head. In addition, since a single drive motor is used, it is not necessary to completely synchronize the rotations of two drive motors for driving them, which is troublesome to carry out; and controlling of the drive motor (DD motor) can be simplified.

According to the invention of Claim 2, the drive shaft and the drive motor are connected to each other at a location between the pair of drive transmission mechanisms connecting the respective support shafts to the drive shaft, that is, at a location of the central portion of the drive shaft in the axial direction of the drive shaft or at a location near the central portion. By this, compared to the case in which the drive motor is connected to an end portion of the drive shaft, for example, the occurrence of twisting of the drive shaft is reduced, thereby making it possible to maintain high processing precision.

According to the invention of Claim 3, the drive motor is disposed in the housing of the support head, thereby making it possible to further reduce the size of the support head. In addition, since the drive shaft is directly driven by the drive motor, it is possible to increase indexing precision of an angular position compared to the case in which the drive shaft and the drive motor are connected to each other through a drive transmission mechanism.

According to the invention of Claim 4, two clamping mechanisms are provided on respective sides of a location where the drive motor and the drive shaft are connected to each other, so that holding power of the drive shaft can be increased, and processing involving a high processing load or the like can be carried out.

According to the invention of Claim 5, since cutting powder flying from an end of the tool during processing of a workpiece is blocked by the supporting member, it is possible to prevent the cutting powder from entering a gap between the spindle unit and the support head to the extent possible.

### Brief Description of Drawings

[Fig. 1] Fig. 1 is a sectional view of a machine-tool spindle head 1 according to the present invention, and corresponds to a cutting location along arrow S-S in Fig. 2.
[Fig. 2] Fig. 2 is a side view of the machine-tool spindle head 1 shown in Fig. 1.
[Fig. 3] Fig. 3 is an enlarged sectional view of a clamping mechanism 14 at the machine-tool spindle head 1 shown in Fig. 1.
[Fig. 4] Fig. 4 is a partial sectional side view of a machine-tool spindle head 1 according to another embodiment of the present invention.
[Fig. 5] Fig. 5 is a sectional view of a machine-tool spindle head 1 according to another embodiment of the present invention, and corresponds to a cutting location along arrow S-S in Fig. 6.
[Fig. 6] Fig. 6 is a side view of the machine-tool spindle head 1 shown in Fig. 5.
[Fig. 7] Fig. 7 is a perspective view of a machine tool 52 in which a machine-tool spindle head 1 according to the present invention is built.

### Reference Numerals

- 1: machine-tool spindle head
- 2: tool
- 3: spindle
- 4: spindle unit
- 5: support head
- 6: support shaft
- 7: fork arm
- 8: drive shaft
- 9: drive motor
- 10: drive transmission mechanism
- 11: housing
- 12: motor stator
- 13: motor rotor
- 14: clamping mechanism
- 15: support arm
- 16: base section
- 17: supporting member
- 18: support hole
- 19: mounting base section
- 20: C-axis driving section
- 21: C-axis section
- 22: shaft accommodation hole
- 23: bearing
- 24: bearing
- 25: bearing sleeve
- 26: installation hole
- 27: accommodation hole
- 28: bearing sleeve
- 29: bearing sleeve
- 30: bearing
- 31: bearing
- 32: encoder
- 33: pulley
- 34: pulley
- 35: endless belt
- 36: piston case
- 37: piston member
- 38: compression spring
- 39: disc holder
- 40: clamp disc
- 41: port
- 42: frictional member
- 43: motor output shaft
- 44: motor bracket
- 45: motor pulley
- 46: driving pulley
- 47: endless belt
- 48: tension pulley
- 49: cover
- 50: linking tool
- 51: recess-protrusion portion
- 52: machine tool
- 53: head
- 54: column
- 55: cross rail
- 56: saddle
- 57: ram
- 58: table
- 59: workpiece

### Best Mode for Carrying Out the Invention

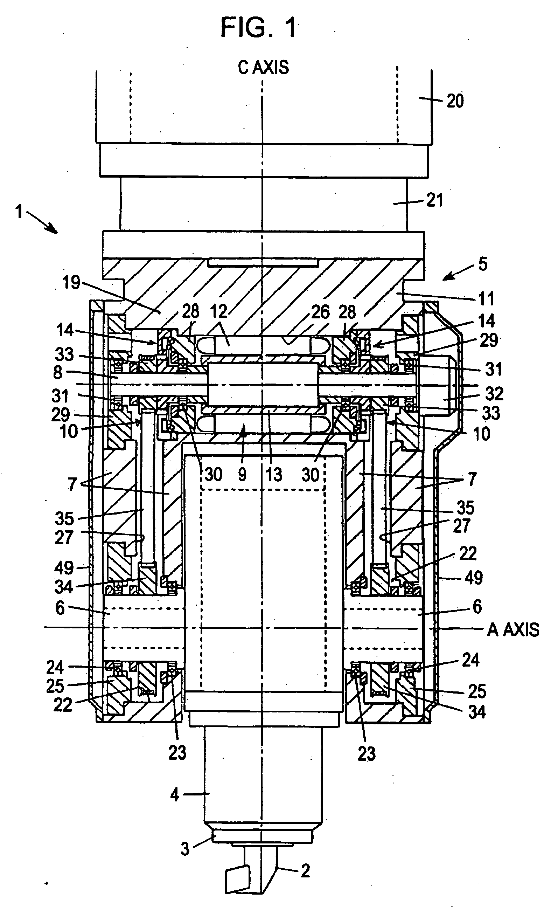

Figs. 1 to 3 show the structure of a machine-tool spindle head 1 according to a typical embodiment of the present invention. In Figs. 1 to 3, the machine-tool spindle head 1 includes a spindle unit 4 that rotationally drives a spindle 3, and a support head 5 that rotatably supports the spindle unit 4.

The spindle unit 4 is a built-in motor type that has a spindle motor built therein (not shown). The spindle 3 is rotationally driven by the spindle motor. During a cutting operation, a tool 2 that is suitable for the cutting operation is mounted to an end of the spindle 3. The spindle 3 cuts a workpiece (processing object) by cutting rotation of the tool 2.

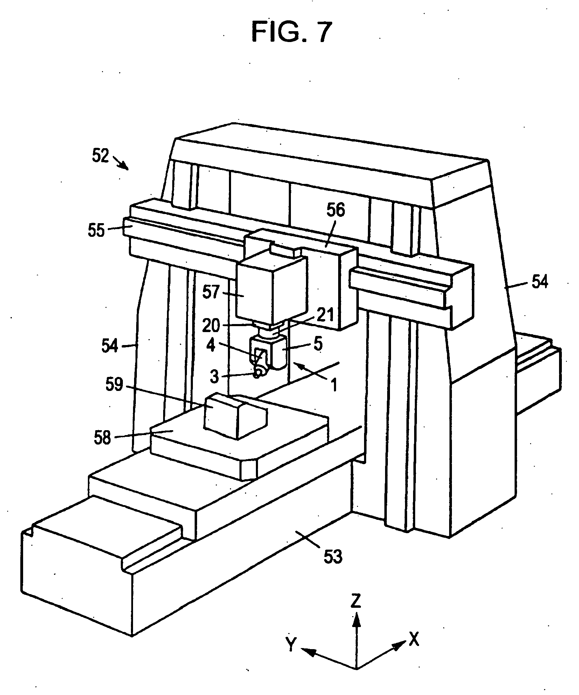

The support head 5 is formed by a fork housing 11 including a pair of left and right fork arms 7. A mounting base section 19 of the housing 11 is mounted while being positioned at a C-axis section 21 of a C-axis driving section 20. The C-axis driving section 20, which will be described later with reference to Fig. 7, is held by a machine tool, such as a machining center; has a drive motor, such as a DD motor, built therein; and rotates (swings) the C-axis section 21 around a C axis (an axis parallel to a Z axis of the machining center) to change the orientation of the support head 5. While the spindle 3 is in a standby state, the C axis is aligned with the central axis of the spindle 3.

In order to support the spindle head 4 so as to be rotatable around an A axis as the center of rotation, the fork support head 5 rotatably supports a pair of left and right support shafts 6 in a shaft accommodation hole 22 on the A axis of the pair of fork arms 7. That is, in order to provide wires for an electrical system or pipes for a fluid system, the pair of support shafts 6 are hollow. In the shaft accommodation hole 22 having respective ends open, the support shafts 6 are on the A axis, and are secured to respective side surfaces of the spindle unit 4 at the ends of the support shafts 6 that face the spindle unit 4.

At sides close to side surfaces of the spindle unit 4, that is, at inner sides of the pair of fork arms 7, the pair of support shafts 6 are rotatably supported by bearings 23 mounted to the respective fork arms 7. At outer sides of the fork arms 7, the pair of support shafts 6 are rotatably supported by annular bearing sleeves 25, mounted to the respective fork arms 7, and bearings 24, secured to inner portions of the bearing sleeves 25. The A axis is aligned with the central axes of the pair of support shafts 6, and is orthogonal to the C axis.

In order to accommodate, for example, a drive motor 9 for driving the spindle unit 4 around the A axis as center, the support head 5 has an installation hole 26 opening at both left and right outer sides at the mounting base section 19 thereof. In order to accommodate each drive transmission mechanism 10 thereof, the support head 5 has an installation hole 27, communicating with the shaft accommodation hole 22 from the accommodation hole 26, at an inner portion of each fork arm 7.

The spindle unit 4 is rotationally driven around the A axis as the center of rotation by a drive shaft 8 (mounted in the support head 5), the drive motor 9 (which rotates the drive shaft 8), and the pair of drive transmission mechanisms 10 (which transmit rotation of the drive shaft 8 to each support shaft 6). That is, the drive shaft 8 is disposed in the installation hole 26 of the support head 5 so as to extend parallel to an axial direction of the pair of support shafts 6 and so as to extend parallel to the A axis. Each end of the drive shaft 8 is rotatably supported by a bearing sleeve 28 (mounted at a stepped portion at the inner side of the installation hole 26), a bearing 30 (secured to an inner portion of the bearing sleeve 28), a bearing sleeve 29 (mounted to an opening at the outer side of the installation hole 26), and a bearing 31 (secured to an inner portion of the bearing sleeve 29). The outer sides of the respective fork arms 7 are covered by covers 49 mounted to the respective fork arms 7 and having suitable shapes.

As the drive motor 9, a DD motor is used. A motor stator 12 and a motor rotor 13 of the drive motor 9 are disposed in the installation hole 26 of the housing 11, and coaxially with the axis of the drive shaft 8. In the installation hole 26, the motor stator 12 is secured between the pair of left and right bearing sleeves 28; and the otor rotor 13 is fitted to a large-diameter portion of the drive shaft 8 and is rotated along with the drive shaft 8 by being excited by the motor stator 12. A rotation angle position of the drive shaft 8 is detected as an electrical signal by an encoder (rotation detector) 32 mounted to the outer side of the bearing sleeve 29 and connected to one end of the drive shaft 8.

When the drive shaft 8 is rotated by operating the drive motor 9, the rotation is transmitted to the corresponding support shaft 6 by the pair of drive transmission mechanisms 10 at the respective ends of the drive shaft 8, to rotate the spindle unit 4 around the A axis as the center. In this example, the pair of drive transmission mechanisms 10 are formed by pulleys 33, such as timing pulleys, secured to the left and right ends of the drive shaft 8 between the bearing sleeves 28 and the respective bearing sleeves 29; pulleys 34, such as timing pulleys, secured to the left and right support shafts 6 between the bearings 23 and 24; and endless belts 35, such as timing belts, wound upon the pulleys 33 and 34. Here, the endless belts 35 extend through the interior of the accommodation hole 27, and connect the drive shaft 8 and the pair of left and right support shafts 6 to each other. A tension pulley 48 for adjusting belt tension is attached to each endless belt 35.

When rotating the spindle unit 4, a controlling device (not shown) rotates the drive motor 9 in the direction of rotation of the spindle unit 4, and rotates the drive shaft 8 directly connected to the motor rotor 13 of the drive motor 9. By the pair of drive transmission mechanisms 10, the spindle unit 4 is rotated in a target direction around the A axis as the center, to index the pair of support shafts 6 to predetermined rotation angle positions. The rotation angle positions of the pair of support shafts 6 at this time can be confirmed as an electrical signal by the encoder (rotation detector) 32 adjacent to the drive shaft 8.

After indexing the rotation angle positions, the rotational angle positions of the pair of support shafts 6 are maintained by maintaining the rotation angle position of the drive shaft 8 that moves in response to the pair of support shafts 6. In order to maintain the rotation angle position of the drive shaft 8, the machine-tool spindle head 1 has clamping mechanisms 14 in the installation hole 26 of the support head 5. At each side of the drive shaft 8, the clamping mechanism 14 is provided between the drive motor 9 and its corresponding pulley 33 at a connection location of the clamping mechanism 14.

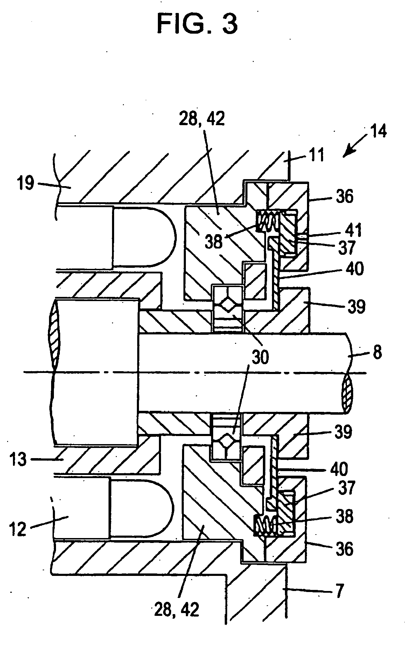

Fig. 3 shows the right clamping mechanism 14 in Fig. 1 among the clamping mechanisms 14 at the respective sides. The left clamping mechanism 14 has a structure which is formed by symmetrically inverting the structure of the right clamping mechanism 14 with respect to the C axis serving as a symmetrical axis. In Fig. 3, the clamping mechanism 14 has, for example, a structure that is similar to a normally unclamp type braking structure. The clamping mechanism 14 includes an annular piston case 36 (mounted to a side surface of a frictional member 42 by the annular bearing sleeve 28), an annular piston member 37 (deformable in the axial direction of the drive shaft 8 in the interior of the piston case 36), a plurality of compression springs 38 (which are accommodated in a hole of the bearing sleeve 28 for retreating the piston member 37 in an unclamping direction and which are interposed between the bearing sleeve 28 and the piston member 37), and a clamp disc 40 (situated between the piston member 37 and the bearing sleeve 28 and mounted in a rotation stoppage state at the drive shaft 8 by a disc holder 39). Since the frictional member 42 of the clamping mechanism 14 is formed by the bearing sleeve 28, the bearing sleeve 28 is also used as the frictional member 42.

If, after indexing the rotation angle positions of the pair of support shafts 6, pressure fluid, such as pressure air or pressure oil, is supplied to the back side of the piston 37 from a port 41 in a back portion of the piston case 36, the piston member 37 opposes the compression springs 38, advances leftwards in Fig. 3, and causes the clamp disc 40 to be pushed against a frictional surface of the frictional member 42 opposing the clamp disc 40. In this pushed state, frictional force generated between a frictional surface of the clamp disc 40 at a rotation side (driving shaft 8) and the frictional surface of the frictional member 42 at a stationary side (housing 11 side) causes the indexed drive shaft 8 to be.set in a clamped state and to stop rotating. The rotation angle positions of the pair of left and right support shafts 6 that move in response to this are maintained while preventing them from rotating.

By this, even by an external force applied to the spindle unit 4 or a load provided during a cutting operation, the pair of clamping mechanisms 14 stably maintain the indexed rotation angle positions of the pair of support shafts 6. If the supply of pressure fluid is stopped, the piston member 37 is pushed by the compression springs 38, and retreats rightwards in Fig. 3. After stopping the clamp .. disc 40 from being pushed against the frictional member 42, the piston 37 is set in an unclamp state. By this unclamp state, the spindle unit 4 is in a state in which it can rotate in the target direction around the A axis as the center.

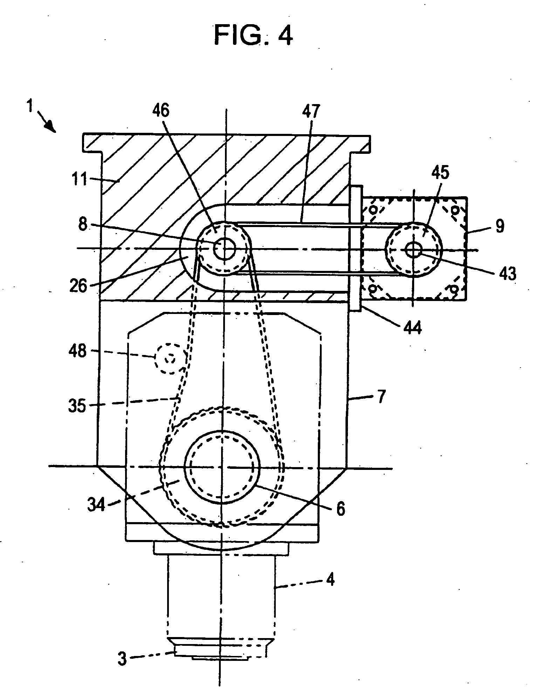

Next, Fig. 4 shows the structure of a machine-tool spindle head 1 according to another embodiment of the present invention. In Fig. 4, a drive motor 9 is mounted to an outer side surface of a housing 11 by a motor bracket 44 instead of in the installation hole 26 of the housing 11. Rotation of a motor output shaft 43 of the drive motor 9 is transmitted to a drive shaft 8 by a motor pulley 45 (mounted to the motor output shaft 43), a drive pulley 46 (mounted to an intermediate portion of the drive shaft 8), and a pair of endless belts 47 (wound upon the motor pulley 45 and the drive pulley 46). In this case, an installation hole 26 is also formed so as to open at a mounting side of the drive motor 9 for placing the endless belt 47.

Even in the machine-tool spindle head 1 shown in Fig. 4, as in the previous embodiment, pulleys (not shown), mounted to respective ends of the drive shaft 8, and a pulley 34, mounted to each support shaft 6, are linked to each other by an endless belt 35. Rotation of the drive shaft 8 is transmitted to each support shaft 6, to rotationally drive the spindle unit 4.

Accordingly, in the machine-tool spindle head 1 according to the present invention, the place where the drive motor 9 is disposed is not limited to the interior of the housing 11 of the support head 5. It may also be at the outer portion of the housing 11. In addition, the place where the drive motor 9 is disposed in the housing 11 is not limited to that in the previous embodiment. It may be any suitable place in the housing 11.

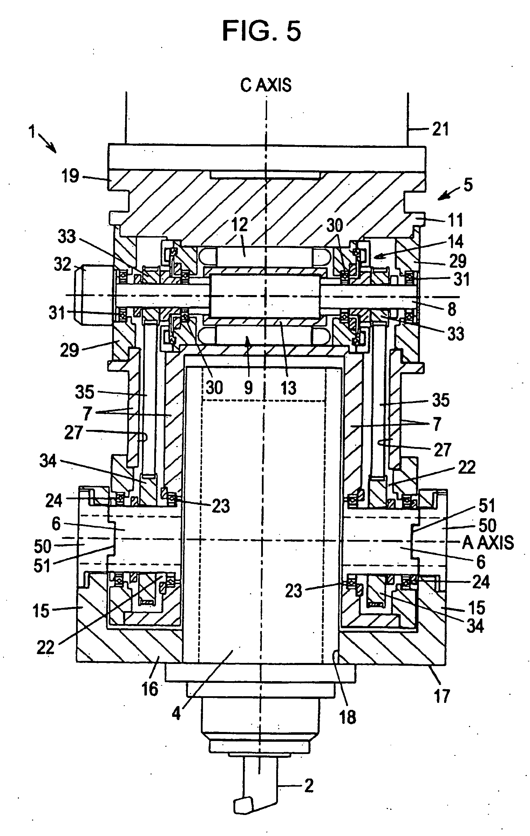

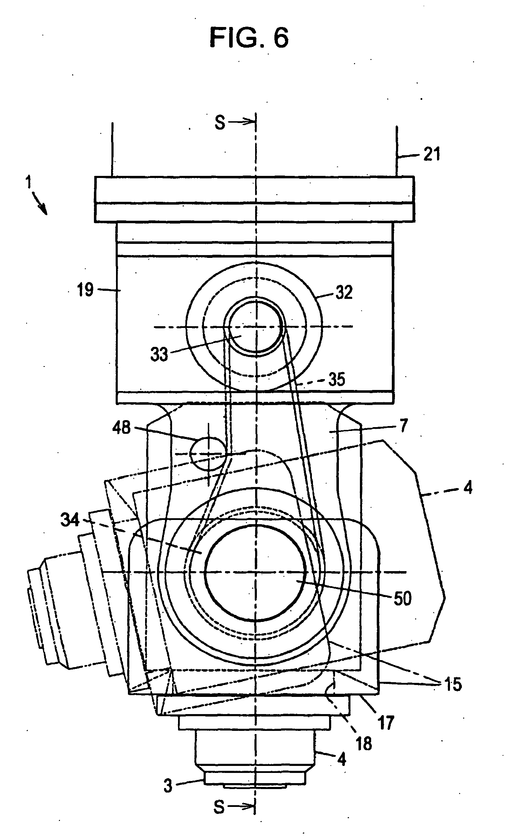

Figs. 5 and 6 show the structure of a machine-tool spindle head 1 according to still another embodiment of the present invention. In Figs. 5 and 6, a spindle unit 4 is not directly supported by a pair of support shafts 6. The spindle unit 4 is rotatably supported by a supporting member 17 supported by the pair of support shafts 6. Therefore, two side surfaces of the spindle unit 4 are not mounted to the two support shafts 6, respectively, so that a gap is formed therebetween.

That is, in order to support the spindle unit 4, the machine-tool spindle unit 1 shown in Figs. 5 and 6 includes the supporting member 17 that is C-shaped in cross section. The supporting member 17 includes a pair of support arms 15 (each arm 15 being linked to its corresponding support shaft 6 at a side of its corresponding support shaft 6 opposite to the spindle unit 4, that is, at the outer side of its corresponding fork arm 7; and facing its corresponding fork arm 7 and extending in an axial direction of the spindle unit 4) and a base section 16 (which connects the pair of support arms 15 to each other). By fitting, for example, a recess-and-protrusion portion 51 provided in a radial direction of a linking tool 50 mounted to an outer side end of its corresponding support shaft 6, each support arm 15 is linked to its corresponding support shaft 6 so as to corotate.

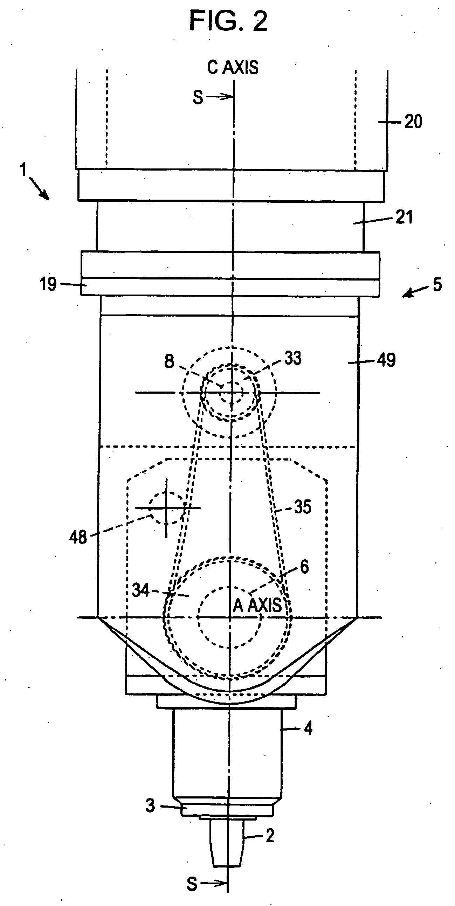

Accordingly, in order to rotatably hold the spindle unit 4 on the A axis, the supporting member 17 has a substantially U shape in cross section that is open at both sides of the spindle unit 4 in the direction of rotation and at a back end portion side of the spindle unit 4 in the axial direction. The base section 16 of the supporting member 17 has a support hole 18 of a size corresponding to that of the spindle unit 4 along the central line of a spindle 3. With an outer peripheral portion of the spindle unit 4 being fitted and inserted in the support hole 18, the spindle unit 4 is supported. The other portions, whose shapes differ slightly from those shown in Figs. 1 to 3, functionally have substantially the same structures as those shown in Figs. 1 to 3. A cover 49 is not provided. An encoder (rotation detector) 32 is mounted to a drive shaft 8 at a side opposite to that in Figs. 1 and 2.

In the embodiment shown in Figs. 5 and 6, when the pair of support shafts 6 are driven and rotated by a drive motor 9, the supporting member 17 rotates along with the pair of support shafts 6 around the A axis as the center. Therefore, the spindle unit 4 supported by the supporting member 17 similarly rotates around the A axis as the center.

In the embodiment shown in Figs. 5 and 6, the width in the A-axis direction of an end of the spindle unit 4 is increased compared to that in the embodiment shown in Figs. 1 to 3. However, since the width is increased only in correspondence with the width of each support arm 15 in the supporting member 17, the machine-tool spindle head 1 is smaller than that in a related art in which a DD motor is disposed in both fork arms 7.

It is possible to prevent cutting powder flying from an end of a tool 2 during processing of a workpiece from entering a space between the spindle unit 4 and the support head 5 to the extent possible. That is, when processing the workpiece, a large amount of fine cutting powder may fly towards the spindle unit 4 from a contact portion between the workpiece and the tool 2, and enter a slight gap between the spindle unit 4 and the support head 5 (the fork arms 7). If the amount of cutting powder is increased, this increase becomes driving resistance to the spindle 3. According to the embodiment shown in Figs. 5 and 6, since the base section 16 of the supporting member 17 virtually does not allow the cutting powder flying from the end of the spindle unit 4 to fly towards the support head 5, the aforementioned problem does not easily occur.

As exemplified in Fig. 7, the machine-tool spindle head 1 according to the present invention is built in a machine tool 52 such as a vertical machining center. In Fig. 7, the machine tool 52 includes a pair of left and right columns 54 (attached to a head 53), a horizontal cross rail 55 (which moves vertically along the pair of columns 54), a saddle 56 (which moves horizontally in a left-right direction (Y-axis direction) along the cross rail 55), a ram 57 (which moves along the saddle 56 in a Z-axis direction), and a table 58 (which moves horizontally along the head 53 in a front-back direction (X-axis direction). In addition, the machine-tool spindle head 1 according to the present invention is mounted to the lower end of the ram 57 by a C-axis driving section 20 so as to be rotatable around a vertical axis (C axis) as center.

When processing a workpiece 59 secured to the table 58, the machine tool 52 moves the table 58, the cross rail 55, the saddle 56, and the ram 57 by performing a numerical-value controlling operation based on a previously set processing program. The machine-tool spindle head 1 is indexed to a predetermined angular orientation by a controlling device (not shown) of the machine tool 52, and the mounted tool 2 is set to a predetermined processing position with respect to the workpiece 59. By this, the machine tool 52 causes the tool 2 to contact each processing surface of the workpiece 59 at an optimum angle, and performs a required cutting operation on the workpiece 59.

In the present invention, the drive motor 9, the drive transmission mechanisms 10, and the clamping mechanisms 14 can be modified in accordance with the machine tool 52 in which they are built in.

For the drive motor 9, a hollow servomotor or a two-axis servomotor may be used instead of the aforementioned DD motor. The number of DD motors built in the mounting base section 19 of the fork-shaped support head 5 is not limited to one. Therefore, two or more DD motors may be disposed in series in the axial direction of the drive shaft 6.

The location where the drive motor 9 and the drive shaft 8 are connected to each other is not limited to a location between the pair of drive transmission mechanisms 10. The motor output shaft 43 of the drive motor 9 may be connected to one end of the drive shaft 8.

The drive transmission mechanisms 10 are not limited to those formed by the pulleys (33, 34, 45, 46) and the belts (35, 47) used in the embodiments. They may be formed to transmit rotation of the drive shaft 8 to the pair of support shafts 6 by a gear train.

Each clamping mechanism 14 is a type of braking means. Although, in the previous embodiments, a total of two clamping mechanisms 14 are provided and set at the respective positions at the respective sides of the drive motor 9, either one of the clamping mechanisms 14 may be omitted in accordance with clamping capability. The structure of each clamping mechanism 14 is not limited to the exemplary structure in which the clamp disc 40 is pushed against the piston member 37, and the clamp disc 40 is clamped by the frictional surface of the piston member 37 and the frictional surface of the frictional member 42 at the housing 11. The structure may be one in which a clamp sleeve, which can be deformed by fluid pressure, clamps the drive shaft 8 and maintains the rotational position of the drive shaft 8.

Further, the C-axis driving section 20 is not a required element in the present invention. Therefore, it can be omitted. When the C-axis driving section 20 is mounted to the ram 57, the machine-tool spindle head 1 is mounted to the ram 57.

### Industrial Applicability

The machine tool 52 according to the present invention is not limited to a vertical machining center. Therefore, it may be a horizontal machining center or other types of machine tools for metal processing.

## Claims

1. A machine-tool spindle head (1) comprising a spindle unit (4) and a fork-shaped support head (5), the spindle unit (4) rotationally driving a spindle (3) to whose end a tool (2) is mounted, the support head (5) including a pair of fork arms (7, 7) rotatably supporting a pair of support shafts (6, 6), respectively, the support head (5) supporting the spindle unit (4) by connecting the pair of support shafts (6, 6) to the spindle unit (4) so as to oppose each other with the spindle unit (4) being disposed therebetween,
wherein the spindle head (1) includes a drive shaft (8), a drive motor (9), and a pair of drive transmission mechanisms (10, 10), the drive shaft (8) being rotatably supported in the support head (5) , **characterised in that** the drive shaft (8) is disposed so as to extend parallel to an axial direction of the support shafts (6), the drive motor (9) rotationally driving the drive shaft (8), the drive transmission mechanisms (10, 10) being disposed in the respective fork arms (7, 7) in the support head (5), connecting an end of the drive shaft (8) and one of the pair of support shafts (6, 6) to each other, and connecting the other end of the drive shaft (8) and the other of the pair of support shafts (6, 6) to each other, and
wherein rotation of the drive shaft (8) caused by the drive motor (9) is transmitted to each support shaft (6) through each of the drive transmission mechanisms (10, 10).

2. The machine-tool spindle head (1) according to Claim 1, wherein the drive motor (9) is connected to the drive shaft (8) between the pair of drive transmission mechanisms (10) in an axial direction of the drive shaft (8).

3. The machine-tool spindle head (1) according to either Claim 1 or Claim 2, wherein the drive motor (9) is disposed in a housing (11) of the support head (5), and a motor stator (12) and a motor rotor (13) of the drive motor (9) are concentrically disposed with respect to an axis of the drive shaft (8).

4. The machine-tool spindle head (1) according to Claim 1, wherein the machine-tool spindle head (1) includes clamping mechanisms (14) for maintaining a rotation angle position of the drive shaft (8) in the support head (5), the clamping mechanisms (14) being provided on respective sides of a location where the drive motor (9) and the drive shaft (8) are connected to each other.

5. The machine-tool spindle head (1) according to Claim 1, wherein the machine-tool spindle head (1) includes a supporting member (17) linked to an end portion of each support shaft (6) at a side opposite to the spindle unit (4), the supporting member (17) including a pair of support arms (15), which face the pair of fork arms (7) and extend in an axial direction of the spindle unit (4), and a base section (16), which connects the pair of support arms (15) to each other, and
wherein, with the spindle unit (4) being fitted and inserted in a support hole (18) in the base section (16) of the supporting member (17), an outer peripheral portion of the spindle unit (4) is supported by the supporting member (17).

## Patentansprüche

1. Werkzeugmaschinen-Spindelkopf (1) umfassend eine Spindel-Einheit (4) und einen gabelförmigen Haltekopf (5), wobei die Spindel-Einheit (4) eine Spindel (3) drehend antreibt, an deren Ende ein Werkzeug (2) befestigt ist, wobei der Haltekopf (5) ein Paar von Gabelarmen (7, 7) umfasst, die ein Paar von Halteachsen (6, 6) jeweils drehbar lagern, wobei der Haltekopf (5) die Spindel-Einheit (4) über ein Verbinden des Paars von Halteachsen (6, 6) mit der Spindeleinheit (4) lagert, so dass sie einander gegenüberliegen, wobei die Spindel-Einheit (4) dazwischen angeordnet ist,
wobei der Spindelkopf (1) umfasst eine Antriebswelle (8), einen Antriebsmotor (9) und ein Paar von Antriebs-Übertragungsmechanismen (10, 10), wobei die Antriebswelle (8) drehbar in dem Haltekopf (5) gelagert ist, **dadurch gekennzeichnet, dass** die Antriebswelle (8) derart angeordnet ist, dass sie sich parallel zu einer axialen Richtung der Halteachsen (6), erstreckt, wobei der Antriebsmotor (9) drehend die Antriebswelle (8) antreibt, wobei der Antriebs-Übertragungsmechanismus (10, 10) in den jeweiligen Gabelarmen (7, 7) in dem Haltekopf (5) angeordnet ist, ein Ende der Antriebswelle (8) und eines von dem Paar von den Halteachsen (6, 6) miteinander verbindet, und das andere Ende der Antriebswelle (8) und das andere von dem Paar der Halteachsen (6, 6) miteinander verbindet, und
wobei eine Drehung der Antriebswelle (8), die über den Antriebsmotor (9) bewirkt wird, zu jeder Halteachse (6) durch jeden der Antriebs-Übertragungsmechanismen (10, 10) übertragen wird.

2. Werkzeugmaschinen-Spindelkopf (1) gemäß Anspruch 1, bei dem der Antriebsmotor (9) mit der Antriebswelle zwischen dem Paar von Antriebs-Übertragungsmechanismen (10) in einer axialen Richtung der Antriebswelle (8) verbunden ist.

3. Werkzeugmaschinen-Spindelkopf (1) gemäß entweder Anspruch 1 oder 2, bei dem der Antriebsmotor (9) in einem Gehäuse (11) des Haltekopfs (5) angeordnet ist, und ein Motor-Stator (12) und ein Motor-Rotor (13) des Antriebsmotors (9) bezüglich einer Achse der Antriebswelle (8) konzentrisch angeordnet sind.

4. Werkzeugmaschinen-Spindelkopf (1) gemäß Anspruch 1, bei dem der Werkzeugmaschinen-Spindelkopf (1) einen Klemm-Mechanismus (14) für ein Aufrechterhalten einer Drehwinkelposition der Antriebswelle (8) in dem Haltekopf (5) umfasst, wobei der Klemmmechanismus (14) an jeweiligen Seiten von einem Ort vorgesehen ist, an dem der Antriebsmotor (9) und die Antriebswelle (8) miteinander verbunden sind.

5. Werkzeugmaschinen-Spindelkopf (1) gemäß Anspruch 1, bei dem der Werkzeugmaschinen-Spindelkopf (1) ein Halteelement (17) umfasst, das mit einem Endbereich von jeder Halteachse (6) an einer Seite gegenüberliegend zu der Spindel-Einheit (4) verbunden ist, wobei das Halteelement (17) ein Paar von Haltearmen (15) umfasst, die dem Paar von Gabelarmen (7) gegenüberliegen und sich in eine axiale Richtung der Spindel-Einheit (4) erstrecken, und einen Basisabschnitt (16), der das Paar von Haltearmen (15) miteinander verbindet, und
wobei, wenn die Spindel-Einheit (4) in eine Halteausnehmung (18) in dem Basisabschnitt (16) des Halteelements (17) eingepasst und eingeführt ist, ein äußerer Umfangsbereich der Spindel-Einheit (4) über das Halteelement (17) gelagert ist.

## Revendications

1. Tête de broche pour machine-outil (1) comprenant une unité de broche (4) et une tête de support en forme de fourche (5), l'unité de broche (4) entraînant en rotation une broche (3) sur l'extrémité de laquelle un outil (2) est monté, la tête de support (5) comprenant une paire de bras en forme de fourche (7, 7) supportant de manière rotative une paire d'arbres de support (6, 6), respectivement, la tête de support (5) supportant l'unité de broche (4) en reliant la paire d'arbres de support (6, 6) à l'unité de broche (4) de manière à ce qu'ils soient opposés l'un à l'autre, l'unité de broche (4) étant disposée entre eux,
- dans laquelle la tête de broche (1) comprend un arbre d'entraînement (8), un moteur d'entraînement (9), et une paire de mécanismes de transmission d'entraînement (10, 10), l'arbre d'entraînement (8) étant supporté de manière rotative dans la tête de support (5), **caractérisée en ce que** l'arbre d'entraînement (8) est disposé de manière à s'étendre parallèlement à une direction axiale des arbres de support (6), le moteur d'entraînement (9) entraînant en rotation l'arbre d'entraînement (8), les mécanismes de transmission d'entraînement (10, 10) étant disposés dans les bras en forme de fourche respectifs (7, 7) dans la tête de support (5), en reliant une extrémité de l'arbre d'entraînement (8) et l'un de la paire d'arbres de support (6, 6) l'un à l'autre, et en reliant l'autre extrémité de l'arbre d'entraînement (8) et l'autre de la paire d'arbres de support (6, 6) l'un à l'autre, et
- dans laquelle la rotation de l'arbre d'entraînement (8) causée par le moteur d'entraînement (9) est transmise à chaque arbre de support (6) par l'intermédiaire de chacun des mécanismes de transmission d'entraînement (10, 10).

2. Tête de broche pour machine-outil (1) selon la revendication 1, dans laquelle le moteur d'entraînement (9) est relié à l'arbre d'entraînement (8) entre la paire de mécanismes de transmission d'entraînement (10) dans une direction axiale de l'arbre d'entraînement (8).

3. Tête de broche pour machine-outil (1) selon la revendication 1 ou la revendication 2, dans laquelle le moteur d'entraînement (9) est disposé dans un logement (11) de la tête de support (5), et un stator de moteur (12) et un rotor de moteur (13) du moteur d'entraînement (9) sont disposés de manière concentrique par rapport à un axe de l'arbre d'entraînement (8).

4. Tête de broche pour machine-outil (1) selon la revendication 1, dans laquelle la tête de broche pour machine-outil (1) comprend des mécanismes de blocage (14) destinés à maintenir une position d'angle de rotation de l'arbre d'entraînement (8) dans la tête de support (5), les mécanismes de blocage (14) étant placés de part et d'autre d'un endroit où le moteur d'entraînement (9) et l'arbre d'entraînement (8) sont reliés l'un à l'autre.

5. Tête de broche pour machine-outil (1) selon la revendication 1, dans laquelle la tête de broche pour machine-outil (1) comprend un élément de support (17) relié à l'extrémité de chaque arbre de support (6) opposée à l'unité de broche (4), l'élément de support (17) comprenant une paire de bras de support (15), qui sont orientés vers la paire de bras en forme de fourche (7) et s'étendent dans une direction axiale de l'unité de broche (4), et une section basale (16), qui relie la paire de bras de support (15) l'un à l'autre, et dans laquelle, l'unité de broche (4) étant ajustée et insérée dans un orifice de support (18) situé dans la section basale (16) de l'élément de support (17), une partie périphérique externe de l'unité de broche (4) est supportée par l'élément de support (17).
